# EUROPÄISCHE PATENTSCHRIFT

(11) **EP 1 704 762 B1**
(45) Veröffentlichungstag und Bekanntmachung des Hinweises auf die Patenterteilung: **05.03.2008**
(21) Anmeldenummer: 06005441.8
(22) Anmeldetag: 17.03.2006
(51) Int. Cl.: A01C 7/04

(54) **Pneumatische Sämaschine**
Pneumatic seeder
Semoir pneumatique

(30) Priorität: 23.03.2005 DE 102005013398
(43) Veröffentlichungstag der Anmeldung: 27.09.2006
(73) Patentinhaber: Amazonen-Werke H. Dreyer GmbH & Co. KG, 49205 Hasbergen (DE)
(72) Erfinder: Johannaber, Stefan Jan, 49536 Lienen (DE)

(56) Entgegenhaltungen:
- DE-A1- 2 826 658
- FR-A- 2 813 160
- US-A- 4 306 509
- US-B1- 6 516 733

## Beschreibung

Die Erfindung betrifft eine pneumatische Einzelkornsämaschine gemäß des Oberbegriffes des Patentanspruches 1.

Eine derartige Einzelkornsämaschine ist beispielsweise durch die EP 0 598 636 B1 bekannt. Damit die Körner sich an den Perforierungen der Perforationsreihen anlagern können, muss eine Druckdifferenz zwischen dem Innenraum der Vereinzelungstrommel und dem Außenbereich der Vereinzelungstrommel geschaffen werden. Hierdurch ergibt sich auch eine Druckdifferenz zwischen der Vereinzelungstrommel und der jeweiligen Seitenwand. Es besteht nun das Problem, dass sich Körner nicht nur an den Perforierungen der Perforation beim Bewegen der Perforationsreihen bzw. der Vereinzlungstrommel durch den Saatgutvorrat anlagern, sondern sich auch in dem Abdichtungs- und Übergangsbereich zwischen der Trommel und den Seitenwänden. Hier besteht ein kleiner Ringspalt.

Um zu verhindern, dass sich im Abdichtungs- und Übergangsbereich zwischen der Vereinzelungstrommel und den Seitenwänden Saatkörner anlagern, ist in der DE 101 40 342 B4 vorgeschlagen worden, den Seitenwänden jeweils eine Zwischenwand zuzuordnen, so dass die Zwischenwände und die Seitenwände seitliche Kästen bilden, die mit einem Druck beaufschlagbar sind, der zwischen dem Innendruck und dem Außendruck des Behälters liegt. Eine derartige Ausgestaltung ist jedoch relativ aufwändig.

Der Erfindung liegt die Aufgabe zugrunde, bei einer Einzelkornsämaschine gemäß des eingangs geschilderten Standes der Technik mit einfachen Maßnahme zu verhindern, dass die sich in dem Zwischenspalt bzw. im Bereich des Zwischenspaltes zwischen Trommel und Seitenwand anlagernden Saatkörner nicht über den Gesamttrommelumfang mitgenommen werden.

Diese Aufgabe wird erfindungsgemäß durch das kennzeichnende Merkmal des Patenanspruches 1 gelöst. Infolge dieser Maßnahme werden die sich im Übergangs- und Abdichtungsbereich zwischen Trommel und Seitenwand anlagernden Saatkörner durch die Abstreiferelemente vor erreichen des Scheitelpunktes der Trommel abgestreift und fallen so wieder in den Saatgutvorrat zurück. Als besonders vorteilhaft hat sich herausgestellt, wenn die Abstreiferelemente aus einem elastischen Material bestehen. Sie können sich so der Trommelkontur anpassen.

Auch ist möglich, die Abstreiferelemente federbelastet gegen die Trommel oder die Seitenwand anzuordnen, so dass sie ebenfalls der Trommelkontur folgen können.

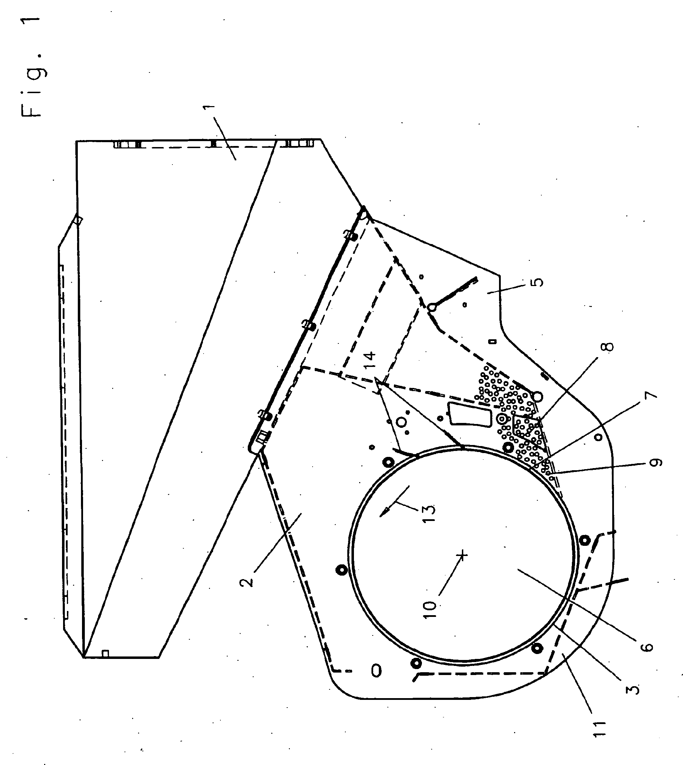

Weitere Einzelheiten der Erfindung sind den übrigen Unteransprüchen, der Beispielsbeschreibung und den Zeichnungen zu entnehmen. Hierbei zeigen
- Fig. 1: den Vorratsbehälter und die Vereinzelungstrommel der Sämaschine in Seitenansicht in vereinfachter und ausschnittsweiser Darstellung,

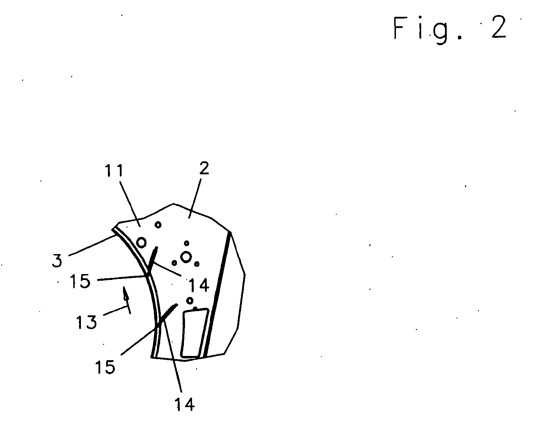

- Fig. 2: die Anordnung der Trommel mit den Abstreiferelementen in vergrößerter Darstellung und Teilansicht und

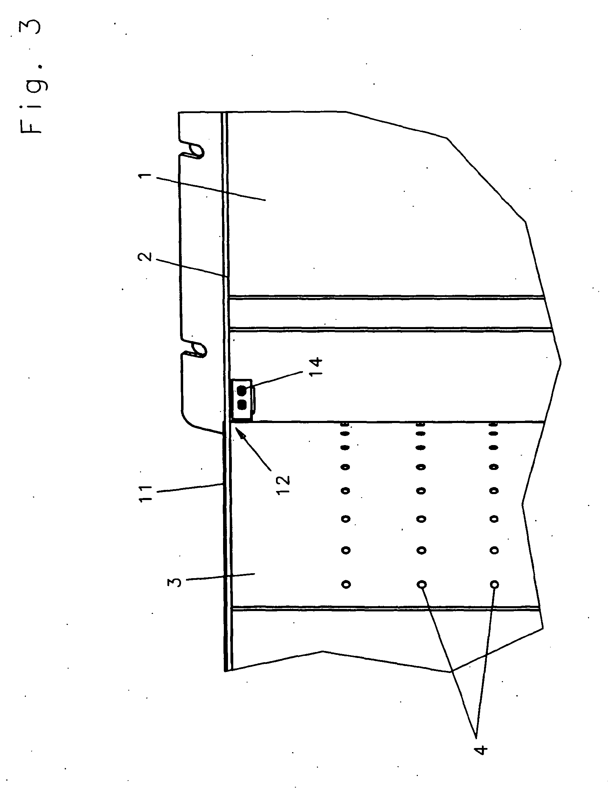

- Fig. 3: die Anordnung der Trommel mit den Abstreiferelementen in Teilansicht und in der Draufsicht.

Die Sämaschine weist den Vorratsbehälter 1 und die unterhalb des Vorratsbehälters 1 in einem Gehäuse 2 drehbar angeordnete und rotierend angetriebene Vereinzelungstrommel 3 auf. In der Umfangsfläche der Vereinzelungstrommel 3 sind kreisförmig angeordnete Perforationsreihen 4 angeordnet. Der Vorratsbehälter 1 und das Gehäuse 2 oberhalb der Trommel 3 sind zumindest annähernd druckdicht mittels eines Deckels verschlossen. Über den Luftanschlusskasten 5 ist der Vorratsbehälter 1 und das Gehäuse 2 oberhalb der Trommel 3 durch das in dem Anschlusskasten 5 angeschlossene und nicht dargestellte Druckgebläse mit Druckluft beaufschlagbar, so dass die Perforationsreihen 4 mit einer Druckdifferenz zwischen dem Innenraum 6 der Vereinzelungstrommel 3 und dem Außenbereich 7 der Vereinzelungstrommel 3 erzeugt wird. Aufgrund dieser Druckdifferenz lagern sich an den Perforationsreihen 4 der Vereinzelungstrommel 3, wenn diese durch den Saatgutvorrat 8, der sich aufgrund der Führung des Saatgutschachtes 9 bis unterhalb der Drehachse 10 der Trommel 3 erstreckt, die Samenkörner an. Der Saatgutvorratsbehälter 1 bzw. das Gehäuse unterhalb des Saatgutvorratsbehälters 1, in dem die Vereinzelungstrommel 3 drehend und abdichtend gelagert ist, weist die einander beabstandeten Seitenwände 11 auf, die sich parallel zur Bewegungsrichtung der Trommel 3 erstrecken und mit der Trommel 3 zumindest annähernd abdichtend zusammen wirken.

In dem Abdichtungsbereich 12 zwischen der Trommel 3 und der jeweiligen Seitenwand 11 sind auf der Saatgutaufnahmeseite 7 der Trommel 3 im Ausführungsbeispiel zwei in Drehrichtung 13 der Trommel 3 beabstandet zueinander angeordnete Abstreiferelemente 14 oberhalb des Saatgutvorrates 8 angeordnet. Die Abstreiferelemente 14 sind einstellbar angeordnet, µm die Abstreiferkanten 15 der Abstreiferelemente 14 in einem optimalen Abstand zu der Seitenwand 11 und der Oberfläche 7 der Trommel 3 einzustellen. Die Abstreiferelemente 14 können aus einem elastischen Material bestehen oder federbelastet gegen die Trommel 3 oder die Seitenwand 11 drückend angeordnet sein, um so auch kleine Samenkörner, wie beispielsweise Rapskörner zuverlässig abstreifen zu können. Diese in dem Abdichtungsbereich 12 zwischen Trommel 3 und Seitenwand 1 angeordneten Abstreiferelemente 14 dienen dazu, die sich an der Trommel 3 in dem Spaltbereich zwischen Trommel 3 und Seitenwand 11 bzw. in dem Abdichtungsbereich 12 zwischen Trommel 3 und Seitenwand 11 aufgrund der Druckdifferenz zwischen dem Inneren des Gehäuses2. und dem Bereich außerhalb des Gehäuses 2 und der Trommel 3 sich anlagernden Samenkörner sicher abzustreifen, damit diese nicht über den Scheitelpunkt der Trommel 3 mitgenommen werden, sondern bereits nach Möglichkeit unterhalb der Drehachse der Trommel 3 abgestreift werden und so in den Saatgutvorrat 8 zurückfallen. Aufgrund der Druckdifferenz zwischen dem Innenraum des Gehäuses 2 und dem Inneren 6 der Trommel 3 bzw. in dem Abdichtungsbereich zwischen Trommel 3 und Seitenwand 11 lagern sich nicht nur Samenkörner an den Perforationsreihen 4 an, sondern auch in dem Abdichtungsbereich zwischen Trommel 3 und Seitenwand 11 und werden von der Trommel 3 durch deren Drehung mitgenommen. Diese nicht in gewünschter Weise aufgenommenen Samenkörner werden dann von den Abstreiferelementen 14 im Abdichtungsbereich zwischen Trommel 3 und Seitenwand 11 abgestreift und fallen so in den Saatgutvorrat 8 zurück.

## Patentansprüche

1. Pneumatische Einzelkornsämaschine mit einem Saatgutvorratsbehälter (1) und zumindest einer drehbar angeordneten Vereinzelungstrommel (3), in deren Umfangsfläche kreisförmig angeordnete Perforationsreihen (4) angebracht sind, einem Gebläse, mittels welchem eine Druckdifferenz zwischen dem Innenraum der Vereinzelungstrommel (3) und dem Außenbereich der Vereinzelungstrommel (3) erzeugbar ist, so dass, wenn die Vereinzelungstrommel (3) durch den Saatgutvorrat (8) geführt wird, sich an den Perforationen (4) der perforierten Trommel (3) Samenkörner anlagern, wobei der Saatgutvorratsbehälter (1) zwei von einander beabstandete Seitenwände (11) aufweist, die sich parallel zur Bewegungsrichtung der Trommel (3) und senkrecht zur Drehachse der Trommel (3) erstrecken und mit der Trommel (3) zumindest annähernd abdichtend zusammenwirken, **dadurch gekennzeichnet, dass** jeweils im Abdichtungsbereich (12) zwischen Trommel (3) und Seitenwand (11) auf der Saatgutaufnahmeseite (7) der Trommel (3) zumindest ein Abstreiferelement (14) oberhalb des Saatgutvorrates (8) zum Abstreifen der im Abdichtungsbereich (12) zwischen Trommel (3) und Seitenwand (11) anhaftenden Samenkörner angeordnet ist.

2. Einzelkornsämaschine nach Anspruch 1, **dadurch gekennzeichnet, dass** das Abstreiferelement (14) einstellbar angeordnet ist.

3. Einzelkornsämaschine nach Anspruch 1, **dadurch gekennzeichnet, dass** das Abstreiferelement (14) aus einem elastischen Material besteht.

4. Einzelkornsämaschine nach Anspruch 1, **dadurch gekennzeichnet, dass** das Abstreiferelement (14) federbelastet gegen die Trommel (3) und/oder die Seitenwand (11) angeordnet ist.

## Claims

1. Pneumatic single seeder seed drill including a seed hopper (1) and at least one rotatably disposed separating drum (3), with rows of perforations (4) being provided disposed circularly on the circumferential face of the said separating drum, a blower, by means of which a pressure differential can be generated between the interior of the separating drum (3) and the exterior region of the separating drum (3) such that when the separating drum (3) is moved through the seed store (8), grains of seed attach themselves to the perforations (4) on the perforated drum (3), wherein the seed hopper (1) includes two side walls (11), which are spaced from each other, extend parallel to the direction of movement of the drum (3) and at right angles relative to the axis of rotation of the drum (3) and interact in an at least approximately sealing manner with the drum (3), **characterised in that** in each sealing region (12) between drum (3) and side wall (11), on the seed receiving side (7) of the drum (3), there is disposed at least one scraper element (14) above the seed store (8) for scraping off the grains of seed that adhere in the sealing region (12) between drum (3) and side wall (11).

2. Single seeder seed drill according to claim 1, **characterised in that** the scraper element (14) is disposed so as to be adjustable.

3. Single seeder seed drill according to claim 1, **characterised in that** the scraper element (14) is produced from a resilient material.

4. Single seeder seed drill according to claim 1, **characterised in that** the scraper element (14) is disposed in a spring-loaded manner against the drum (3) and/or the side wall (11).

## Revendications

1. Semoir pneumatique de précision comportant un réservoir à semence (1) et au moins un tambour séparateur (3) monté à rotation et dont la surface périphérique comporte des rangées de perforations (4) réparties en cercles, une machine soufflante créant une différence de pression entre le volume intérieur du tambour séparateur (3) et la plage extérieure du tambour séparateur (3) de façon que lorsque le tambour séparateur (3) passe dans la réserve de semence (8), des graines de semence se fixent sur les perforations (4) du tambour perforé (3),
le réservoir à semence (1) ayant deux parois latérales (11) distantes l'une de l'autre et s'étendant parallèlement à la direction de mouvement du tambour (3) et perpendiculairement à l'axe de rotation du tambour (3) et coopérant avec le tambour (3) pour assurer au moins pratiquement l'étanchéité,
**caractérisé en ce que**
chaque fois dans la plage d'étanchéité (12), entre le tambour (3) et la paroi latérale (11) du côté (7) du tambour (3) qui prélève des graines de semence, il est prévu au moins un élément de raclage (14) au-dessus de la réserve de semence (8) pour racler les graines de semence qui s'accrochent dans la plage d'étanchéité (12), entre le tambour (3) et la paroi latérale (11).

2. Semoir pneumatique de précision selon la revendication 1,
**caractérisé en ce que**
l'élément de raclage (14) est monté de manière réglable.

3. Semoir pneumatique de précision selon la revendication 1,
**caractérisé en ce que**
l'élément de raclage (14) est en une matière élastique.

4. Semoir pneumatique de précision selon la revendication 1,
**caractérisé en ce que**
l'élément de raclage (14) est appliqué par un ressort contre le tambour (3) et/ ou la paroi latérale (11).
